# EUROPEAN PATENT SPECIFICATION

(11) **EP 3 477 803 B1**
(45) Date of publication and mention of the grant of the patent: **30.07.2025**
(21) Application number: 17815050.4
(22) Date of filing: 11.05.2017
(51) Int. Cl.: H02B 3/00

(54) **ELECTRICAL EQUIPMENT BOARD RAISING FIXTURE AND ELECTRICAL EQUIPMENT BOARD RAISING METHOD**
VORRICHTUNG ZUM ANHEBEN EINER PLATTE FÜR ELEKTRISCHE AUSRÜSTUNG UND VERFAHREN ZUM ANHEBEN EINER PLATTE FÜR ELEKTRISCHE AUSRÜSTUNG
DISPOSITIF D'ÉLÉVATION DE CARTE D'ÉQUIPEMENT ÉLECTRIQUE ET PROCÉDÉ D'ÉLÉVATION DE CARTE D'ÉQUIPEMENT ÉLECTRIQUE

(30) Priority: 22.06.2016 JP 2016123170
(43) Date of publication of application: 01.05.2019
(73) Proprietor: Mitsubishi Electric Corporation, Chiyoda-ku Tokyo 100-8310 (JP)
(72) Inventor: MATSUKAWA, Akifumi, Tokyo 100-8310 (JP); OGINO, Masato, Tokyo 100-8310 (JP)
(74) Representative: Witte, Weller & Partner Patentanwälte mbB
(86) International application number: PCT/JP2017/017896
(87) International publication number: WO 2017/221580

(56) References cited:
- EP-A2- 0 621 217
- DE-U1- 202009 015 930
- JP-A- 2007 313 585
- JP-A- 2007 313 585
- JP-A- 2016 039 765
- JP-A- H07 164 188
- JP-A- H08 217 211
- JP-A- H11 146 511
- JP-U- 3 010 360
- JP-U- S49 100 122

## Description

### TECHNICAL FIELD

The present invention relates to a standing facility and a standing method of an electrical facility board such as a switchboard, a control board, and a distribution board.

### BACKGROUND ART

Hitherto, the assembly of various types of apparatuses and the like has been performed in a state where an electrical facility board such as a switchboard, a control board, and a distribution board is overturned. The weight of the electrical facility board after the various types of apparatuses are attached is increased considerably.

As a facility in which various types of apparatuses and the like are assembled in an overturned state, there is one shown in Patent Document 1 (JP-A-2007-313585); however, there is nothing to stand an electrical facility board in which various types of apparatuses and the like are assembled.

In order to stand the electrical facility board whose weight is increased considerably as just described, a standing operation with a crane is required. In the standing operation with the crane, the overturned electrical facility board is stood while being hoisted and while keeping communication between a manipulator of the crane and a slinging person of a hoisting wire in the presence of an assembler of the electrical facility board.

### PRIOR ART

Patent Document 1: JP-A-2007-313585

JP H08-217211 A discloses an apparatus where a delivered heavy object is placed on a placement base at the inlet side end part of a carrying-in rail, and is fixed by a tightening device. Its direction is then changed by a rail turning table positioned at the branch position of the carrying-in rail for branch transfer, At the final end of the carrying-in rail, a lateral turning device is on standby with a supporting arm kept in a standing condition, When a lateral turning command is made, the heavy object is turned sideways by the operation of a turning cylinder, The heavy object is transferred to panel assembling and wiring devices in a lateral turning condition for mounting, wiring and so on of various devices. The heavy object which has gone out of the final stage of assembling work is fed to a panel erecting device with a carriage on the delivery side to be erected, and is delivered along the carrying-in rail.

DE 20 2009 015 930 U1 discloses a mounting device comprising an underframe with castors and a tiltable and height-adjustable receiving frame for a base plate to be fitted with components of a switch cabinet, the underframe having, in plan view, an approximately V-shaped wedge shape with a converging rear side and a widening front side and, in side view, a basic shape rising from the rear side to the front side, and in that, in a rest position, an underframe is converted with its rear side into a open front side of an adjacent underframe, at least partially engaging under it, partially insertable.

EP 0 621 217 A2 discloses a chain conveyor having a pair of loops of triple strand chains, frictionally driving pallets supported on upper advance runs, the pallets linked together in subgroups to be able to support long length workpieces. The pallets are driven around the chain loop sprockets at either end of the conveyor, the linked connection allowing relative tilting of the pallets in the subgroup as each subgroup is driven around the sprocket axes. The pallets are held as they are swung around either sprocket axis by a split disc gripper mechanisms which each grip a tapered edge gripper bar mounted spaced below the pallet. A pair of ride bars are also mounted below the pallet, each having a rounded shoulder at either end engaging a chain loop across the inside curvature of the chain loop when passing around the sprockets. The rounded shoulders nonpositively engage the chain link rollers so that the pallets are not positively fixed to the chain loops when swung around the sprocket axis at either end. An overhead form of the conveyor has workpiece hangers depending from each pallet during movement down the lower run, with workpiece suspended therefrom, the upper run being the return run in that embodiment.

### SUMMARY OF THE INVENTION

### PROBLEMS TO BE SOLVED BY THE INVENTION

In the aforementioned conventional electrical facility board, since the weight of the electrical facility board after the various types of apparatuses are attached in the overturned state is increased considerably, the standing operation with the crane is required in order to stand the electrical facility board whose weight is increased considerably as just described. In the standing operation with the crane, a problem exists in that it becomes work by a plurality of persons such as the manipulator of the crane, the slinging person of the hoisting wire, and the assembler of the electrical facility board and it requires much time for the work of standing the electrical facility board.

Furthermore, a problem exists in that it depends on technique of the slinging person who slings the hoisting wire on the overturned electrical facility board and technique of the manipulator of the crane that hoists the overturned electrical facility board and, more particularly, when the overturned electrical facility board is stood, a delicate manipulation skill of the crane is required so that the electrical facility board does not move laterally.

Moreover, many electrical facility boards in which various types of apparatuses and the like are assembled in the overturned states have a weight of approximately 300 kg or more. The overturned electrical facility board of heavy weight such as this is hoisted by a hanging hook portion of the crane; and accordingly, a problem exists in that a load that causes distortion is applied with a hoisting spot as a fulcrum.

The present invention has been made to solve the above described problem, and an object of the present invention is to provide a standing facility of an electrical facility board and a standing method of an electrical facility board, which can easily stand an overturned electrical facility board.

### MEANS FOR SOLVING THE PROBLEMS

The invention, according to Embodiment 1, provides a standing facility for an electrical facility board of claim 1 and a standing method for an electrical facility board of claim 9. Further embodiments of the claimed invention are defined in the dependent claims. Although the claimed invention is only defined by the claims, the below embodiments, examples, and aspects are present for aiding in understanding the background and advantages of the claimed invention.

### ADVANTAGEOUS EFFECT OF THE INVENTION

According to a standing facility of an electrical facility board according to the present invention, there can be obtained a standing facility of an electrical facility board and a standing method of an electrical facility board, which can easily stand an overturned electrical facility board.

### BRIEF DESCRIPTION OF THE DRAWINGS

FIG. 1 is a front view showing a standing facility of an electrical facility board according to Embodiment 1 of the present invention;
FIG. 2 is a sectional view taken along the line II-II of FIG. 1 showing the standing facility of the electrical facility board according to Embodiment 1 of the present invention;
FIG. 3 is a front view showing the standing facility of the electrical facility board according to Embodiment 1 of the present invention;
FIG. 4 is a front view showing the standing facility of the electrical facility board according to Embodiment 1 of the present invention;
FIG. 5 is a sectional view taken along the line V-V of FIG. 4 showing the standing facility of the electrical facility board according to Embodiment 1 of the present invention;
FIG. 6 is a front view showing the standing facility of the electrical facility board according to Embodiment 1 of the present invention;
FIG. 7 is a sectional view showing other example of a transferring roller in the standing facility of the electrical facility board according to Embodiment 1 of the present invention;
FIG. 8 is a sectional view showing other example of the standing roller in the standing facility of the electrical facility board according to Embodiment 1 of the present invention;
FIG. 9 is a front view showing a standing facility of an electrical facility board according to Embodiment 2 of the present invention;
FIG. 10 is a sectional view taken along the line X-X of FIG. 9 showing the standing facility of the electrical facility board according to Embodiment 2 of the present invention;
FIG. 11 is a front view showing the standing facility of the electrical facility board according to Embodiment 2 of the present invention;
FIG. 12 is a front view showing the standing facility of the electrical facility board according to Embodiment 2 of the present invention;
FIG. 13 is a sectional view taken along the line XIII-XIII of FIG. 12 showing the standing facility of the electrical facility board according to Embodiment 2 of the present invention; and
FIG. 14 is a front view showing the standing facility of the electrical facility board according to Embodiment 2 of the present invention.

### MODE FOR CARRYING OUT THE INVENTION

### Embodiment 1.

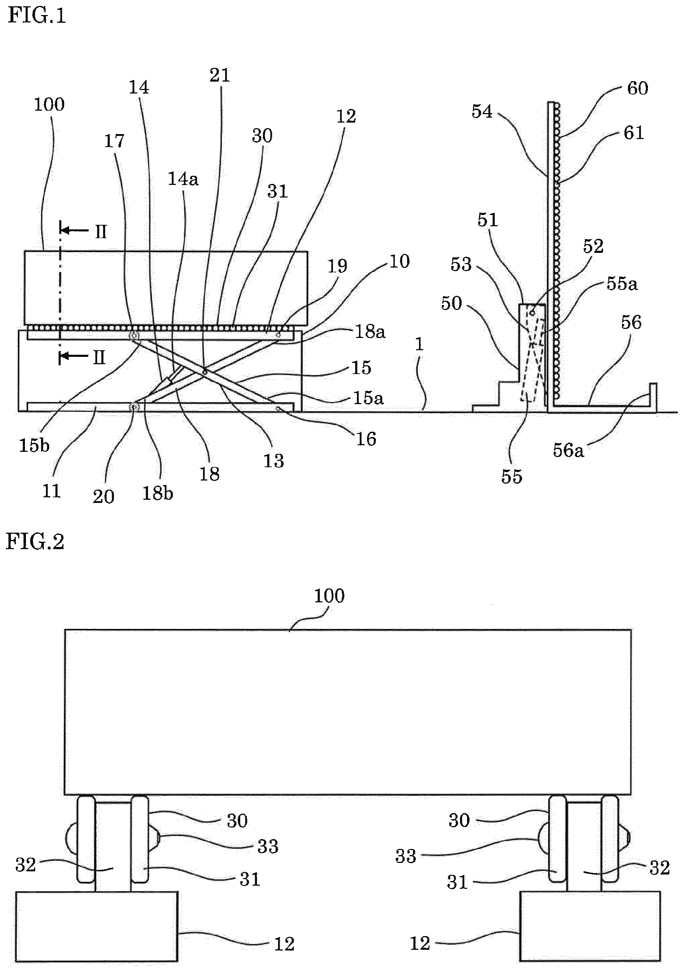

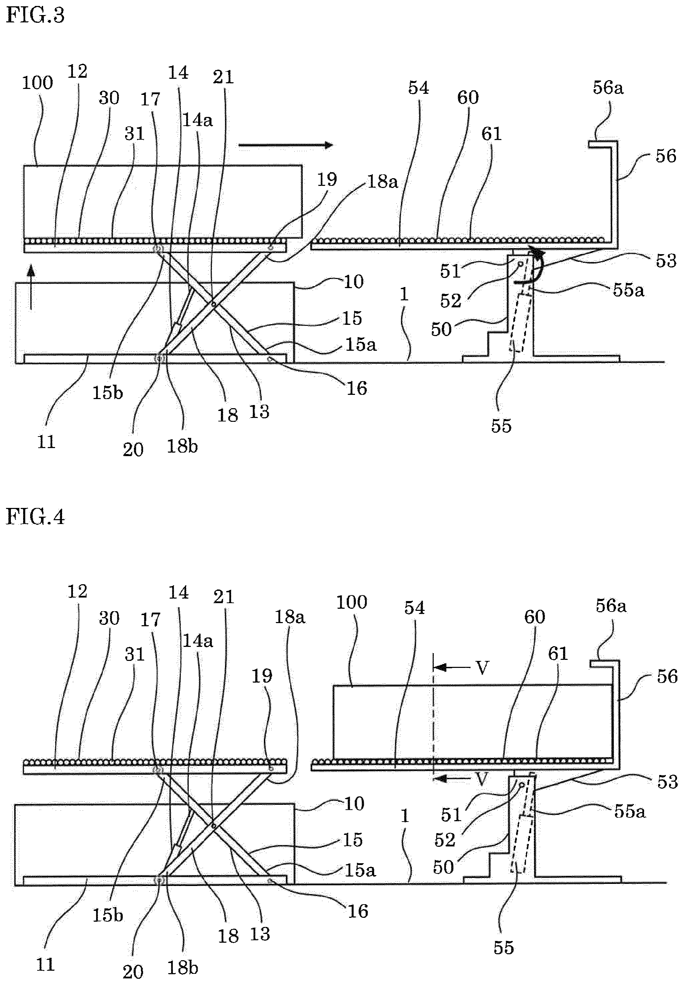

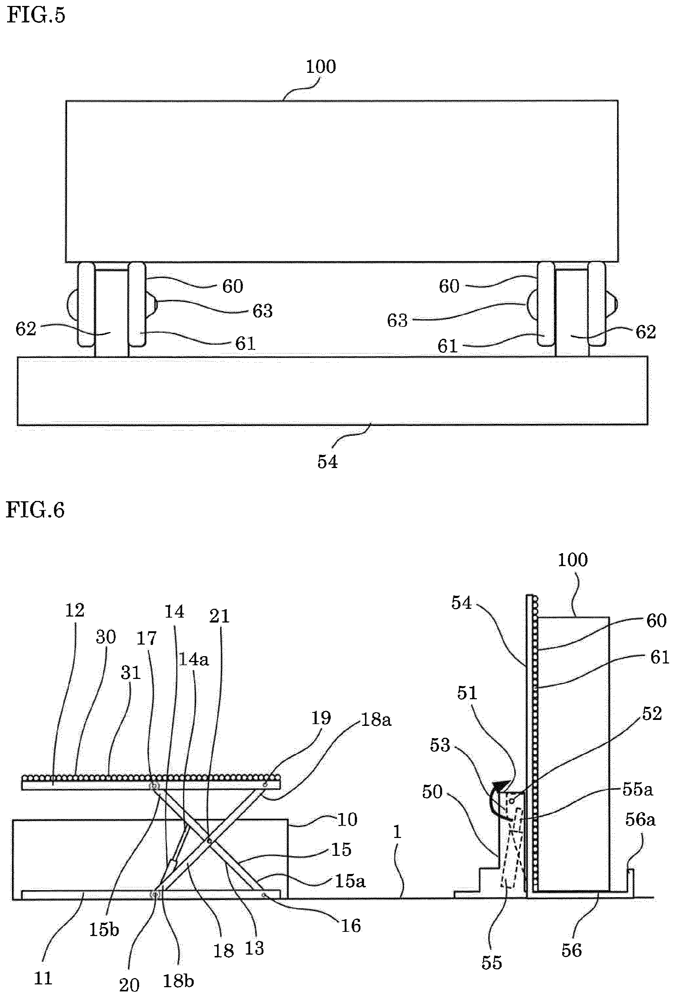

Hereinafter, Embodiment 1 of the present invention will be described based on FIG. 1 to FIG. 6. Then, in each of the drawings, identical or equivalent members and portions will be described with the same reference numerals (and letters) assigned thereto. FIG. 1 is a front view showing a standing facility of an electrical facility board according to Embodiment 1 of the present invention. FIG. 2 is a sectional view taken along the line II-II of FIG. 1 showing the standing facility of the electrical facility board according to Embodiment 1 of the present invention. FIG. 3 is a front view showing the standing facility of the electrical facility board according to Embodiment 1 of the present invention. FIG. 4 is a front view showing the standing facility of the electrical facility board according to Embodiment 1 of the present invention. FIG. 5 is a sectional view taken along the line V-V of FIG. 4 showing the standing facility of the electrical facility board according to Embodiment 1 of the present invention. FIG. 6 is a front view showing the standing facility of the electrical facility board according to Embodiment 1 of the present invention.

In these FIG. 1 to FIG. 6, a raising/lowering apparatus 10 that raises/lowers an electrical facility board 100 is fixed on a floor base 1 such as a surface plate of a facility that assembles the electrical facility board 100 such as a switchboard, a control board, and a distribution board. There is shown a case where the raising/lowering apparatus 10 includes a base 11 fixed on the floor base 1, raising/lowering platforms 12 which are arranged above the base 11 and on which the electrical facility board 100 is to be mounted, a linking mechanism 13 which is engaged to the base 11 and the raising/lowering platforms 12, and a driving mechanism 14 which raises/lowers the raising/lowering platforms 12.

The linking mechanism 13 has a first crossbar 15 and a second crossbar 18. One side 15a of the first crossbar 15 is pivotally and removably supported to a first supporting shaft 16 provided on the base 11; and the other side 15b of the first crossbar 15 is pivotally attached in a propellant manner to a first propellant shaft 17 movably arranged in a horizontal direction in the drawing of FIG. 1, for example, on a lower surface portion of the raising/lowering platforms 12. Furthermore, one side 18a of the second crossbar 18 is pivotally and removably supported to a second supporting shaft 19 provided on the raising/lowering platforms 12; and the other side 18b of the second crossbar 18 is pivotally attached in a propellant manner to a second propellant shaft 20 movably arranged in the horizontal direction in the drawing of FIG. 1, for example, on an upper surface portion of the base 11. Then, central portions of the first crossbar 15 and the second crossbar 18 are pivotally and removably supported by a central supporting shaft 21.

The driving mechanism 14 is coupled to the second propellant shaft 20 and a raising/lowering spindle 14a is coupled to, for example, the first crossbar 15. The linking mechanism 13 is moved upward or downward by the advancement and retraction of the raising/lowering spindle 14a of the driving mechanism 14 to raise/lower the raising/lowering platforms 12 in a vertical direction.

There is shown a case where transferring roller mechanisms 30 are arranged on the raising/lowering platforms 12 in the transferring direction of the electrical facility board 100 and transferring rollers 31 of the transferring roller mechanisms 30 are arranged in at least two rows with a space therebetween. There is shown a case where the transferring roller 31 of the transferring roller mechanism 30 is rotatably attached to a support 32 provided on the raising/lowering platform 12 by a stopper 33.

A standing apparatus 50 is fixed on the floor base 1 near the raising/lowering apparatus 10 fixed on the floor base 1 such as the surface plate; and a standing platform 54 (to be described later) of the standing apparatus 50 is arranged on the floor base 1 with a space in which the standing platform 54 does not come into contact with the raising/lowering apparatus 10 when the standing platform 54 is pivoted so as to be in a horizontal direction.

There is shown a case where the standing apparatus 50 includes a fixing body 51, the standing platform 54 pivotally fitted to the fixing body 51 by a standing propellant shaft 52 via a support body 53, a mounting body 56 provided on the standing platform 54, and a standing driving mechanism 55 which pivots the standing platform 54. Incidentally, the standing platform 54 is provided with the mounting body 56 in which the electrical facility board 100 is to be mounted when the electrical facility board 100 is stood and is provided with, for example, a fence body 56a for the purpose of preventing the electrical facility board 100 from protruding.

The standing driving mechanism 55 is attached to the fixing body 51 and a standing spindle 55a is coupled to the standing platform 54. The standing platform 54 is pivoted by the advancement and retraction of the standing spindle 55a of the standing driving mechanism 55.

There is shown a case where standing roller mechanisms 60 are arranged on the standing platform 54 in the transferring direction of the electrical facility board 100 and standing rollers 61 of the standing roller mechanisms 60 are arranged in at least two rows with a space therebetween. There is shown a case where the standing roller 61 of the standing roller mechanism 60 is rotatably attached to a support 62 provided on the standing platform 54 by a stopper 63.

When the standing platform 54 is pivoted by the standing driving mechanism 55 at a position in the horizontal direction, there is provided a space in which the leading end of the standing platform 54 of the standing apparatus 50 does not contact with the raising/lowering platforms 12 of the raising/lowering apparatus 10 or the electrical facility board 100, as shown in FIG. 3.

Incidentally, an axial line position in the transferring direction of the transferring roller 31 of the transferring roller mechanism 30 is not necessarily the same as an axial line position in the transferring direction of the standing roller 61 of the standing roller mechanism 60; however, in this Embodiment 1, there is shown a case where the axial line position in the transferring direction of the transferring roller 31 of the transferring roller mechanism 30 is the same as the axial line position in the transferring direction of the standing roller 61 of the standing roller mechanism 60.

Next, a standing method of the electrical facility board 100 in this Embodiment 1 will be described. The electrical facility board 100 that is overturned is mounted on the transferring rollers 31 of the transferring roller mechanisms 30 arranged on the raising/lowering platforms 12 of the raising/lowering apparatus 10 and the raising/lowering platforms 12 are raised/lowered by the driving mechanism 14 of the raising/lowering apparatus 10 so as to be height in which the attachment of various types of apparatuses to the electrical facility board 100 becomes easy.

Work of standing the electrical facility board 100 in which various types of apparatuses are assembled is started. During the assembly work of the electrical facility board 100, the standing platform 54 of the standing apparatus 50 is retained at a position in a vertical direction as shown in FIG. 1 and the standing platform 54 of the standing apparatus 50 is pivoted by the standing driving mechanism 55 to set the standing platform 54 to a horizontal position as shown in FIG. 3.

As shown in FIG. 3, the raising/lowering platforms 12 are raised/lowered by the driving mechanism 14 of the raising/lowering apparatus 10 to match the height positions of the transferring rollers 31 of the transferring roller mechanisms 30 on the raising/lowering platforms 12 to the height positions of the standing rollers 61 of the standing roller mechanisms 60 on the standing platform 54 of the standing apparatus 50.

The electrical facility board 100 mounted on the transferring rollers 31 of the transferring roller mechanisms 30 on the raising/lowering platforms 12 is pressed to the standing apparatus 50 side, thereby rotating the transferring rollers 31, whereby the electrical facility board 100 is smoothly transferred to the standing roller 61 sides of the standing roller mechanisms 60 on the standing platform 54 and the standing rollers 61 are rotated. Therefore, the electrical facility board 100 is smoothly transferred and is brought into contact with the mounting body 56 to be mounted on standing rollers 61 of the standing roller mechanisms 60 on the standing platform 54.

The standing platform 54 of the standing apparatus 50 is pivoted by the standing driving mechanism 55 to return the standing platform 54 to the vertical position as shown in FIG. 6, whereby the overturned electrical facility board 100 can be stood in the vertical direction.

As described above, the electrical facility board 100 mounted on the transferring rollers 31 of the transferring roller mechanisms 30 on the raising/lowering platforms 12 is pressed to the standing apparatus 50 side, whereby the electrical facility board 100 can be smoothly transferred to the standing roller 61 sides of the standing roller mechanisms 60 on the standing platform 54 and the electrical facility board 100 is smoothly transferred and is brought into contact with the mounting body 56 to be able to be mounted on the standing rollers 61 of the standing roller mechanisms 60 on the standing platform 54. Then, the standing platform 54 of the standing apparatus 50 is pivoted by the standing driving mechanism 55 to return the standing platform 54 to the vertical position, whereby the overturned electrical facility board 100 can be easily stood in the vertical direction by one person's work.

Therefore, the standing method of the electrical facility board 100 in this Embodiment 1 does not require the standing operation with the crane like the conventional way described above and is not the work by a plurality of persons such as the manipulator of the crane, the slinging person of the hoisting wire, and the assembler of the electrical facility board 100, but it becomes the work by one person of the assembler of the electrical facility board 100. Therefore, much time is not required for the work of standing the electrical facility board 100 and the electrical facility board 100 can be stood by simple work and in a short time.

Furthermore, the standing method of the electrical facility board 100 in this Embodiment 1 does not depend on the technique of the slinging person who slings the hoisting wire on the overturned electrical facility board and the technique of the crane manipulator who hoists the overturned electrical facility board, like the conventional way described above; and, more particularly, the standing method of the electrical facility board 100 in this Embodiment 1 does not require the delicate manipulation skill of the crane so as not to move the electrical facility board laterally and is excellent in safeness when the overturned electrical facility board is stood.

Moreover, as in the conventional way described above, the electrical facility board having a weight of approximately 300 kg or more, on which various types of apparatuses and the like are assembled in the overturned state, is hoisted by the hanging hook portion of the crane; and accordingly, the load that causes distortion is applied with the hoisting spot as the fulcrum. However, in this Embodiment 1, the standing operation is performed while retaining the whole of the electrical facility board 100; and therefore, a load that causes distortion is not applied and it is excellent in reliability.

Incidentally, the electrical facility board 100 stood on the mounting body 56 of the standing apparatus 50 is to be delivered to a subsequent process by a conveyor or the like.

Furthermore, there has been described the case where the fence body 56a is provided on the mounting body 56 of the standing apparatus 50; however, the present invention is not limited to this. But, in the case where the standing can be performed so as not to protrude the electrical facility board 100 when the electrical facility board 100 is stood, the fence body 56a does not need to be provided.

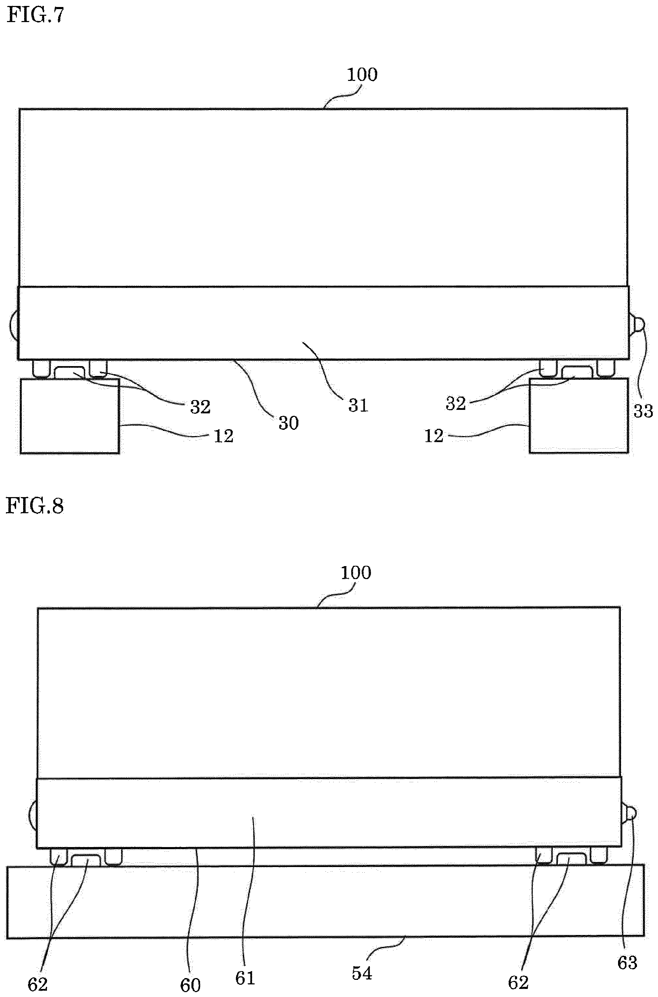

By the way, the aforementioned Embodiment 1 shows the case where the transferring rollers 31 of the transferring roller mechanisms 30 are arranged in at least two rows with a space therebetween; however, the present invention is not limited to this. For example, as shown in FIG. 7, it can also be arranged as one transferring roller 31 that is extended in the axial line direction of the transferring roller 31 of the transferring roller mechanism 30 and the same effects can be exhibited.

Furthermore, the aforementioned Embodiment 1 shows the case where the standing rollers 61 of the standing roller mechanisms 60 are arranged in at least two rows with a space therebetween; however, the present invention is not limited to this. For example, as shown in FIG. 8, it can also be arranged as one standing roller 61 that is extended in the axial line direction of the standing roller 61 of the standing roller mechanism 60 and the same effects can be exhibited.

### Embodiment 2.

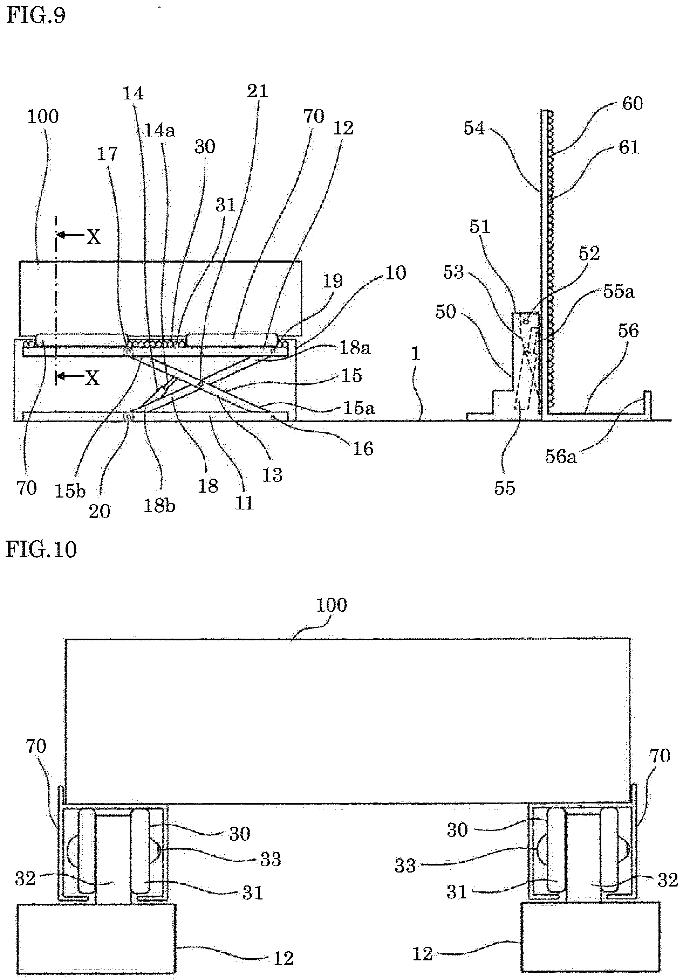

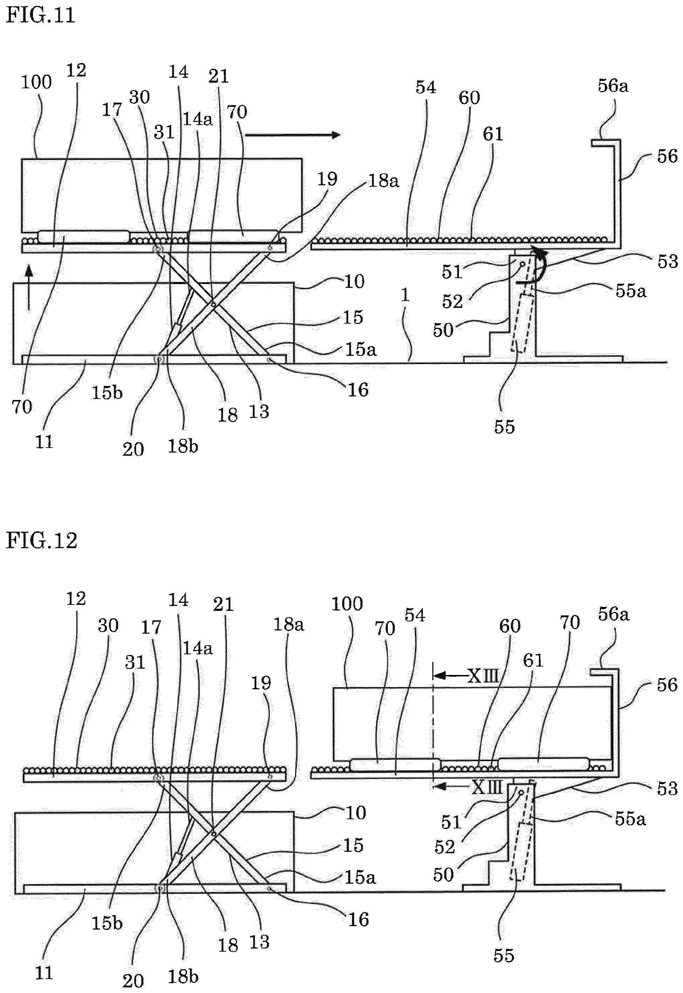

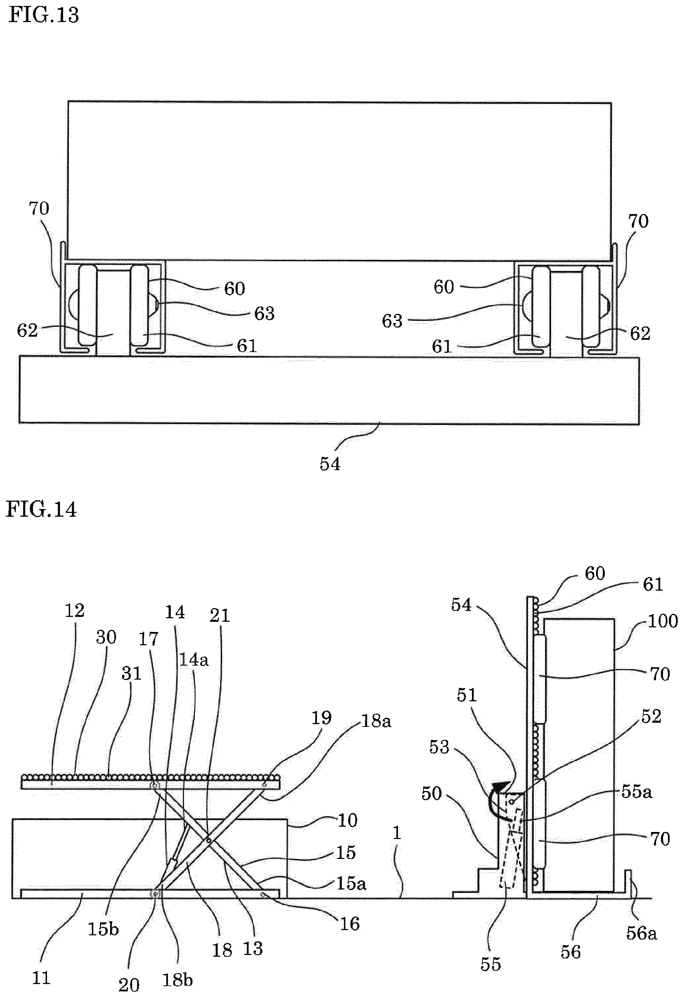

Embodiment 2 of the present invention will be described based on FIG. 9 to FIG. 14. Then, in each of the drawings, identical or equivalent members and portions will be described with the same reference numerals (and letters) assigned thereto. FIG. 9 is a front view showing a standing facility of an electrical facility board according to Embodiment 2 of the present invention. FIG. 10 is a sectional view taken along the line X-X of FIG. 9 showing the standing facility of the electrical facility board according to Embodiment 2 of the present invention. FIG. 11 is a front view showing the standing facility of the electrical facility board according to Embodiment 2 of the present invention. FIG. 12 is a front view showing the standing facility of the electrical facility board according to Embodiment 2 of the present invention. FIG. 13 is a sectional view taken along the line XIII-XIII of FIG. 12 showing the standing facility of the electrical facility board according to Embodiment 2 of the present invention. FIG. 14 is a front view showing the standing facility of the electrical facility board according to Embodiment 2 of the present invention.

In the aforementioned Embodiment 1, there has been described the case where the overturned electrical facility board 100 is mounted on the transferring rollers 31 of the transferring roller mechanisms 30 on the raising/lowering platforms 12 of the raising/lowering apparatus 10. However, in this Embodiment 2, an axial line position in the transferring direction of a transferring roller 31 of a transferring roller mechanism 30 is the same as an axial line position in the transferring direction of a standing roller 61 of a standing roller mechanism 60.

Then, there is provided a skateboard 70 which is movably fitted onto the transferring roller 31 of the transferring roller mechanism 30 and is also capable of being fitted onto the standing roller 61 of the standing roller mechanism 60. Other configuration is the same as the aforementioned Embodiment 1.

There is shown a case where the skateboards 70 are arranged in two sets in the axial line directions of the transferring rollers 31 of the transferring roller mechanisms 30. An electrical facility board 100 that is overturned is mounted on the skateboards 70.

Next, a standing method of the electrical facility board 100 in this Embodiment 2 will be described. The skateboard 70 is fitted onto the transferring roller 31 of the transferring roller mechanism 30 arranged on a raising/lowering platform 12 of a raising/lowering apparatus 10. Then, the overturned electrical facility board 100 is mounted on the skateboards 70, and the raising/lowering platforms 12 are raised/lowered by a driving mechanism 14 of the raising/lowering apparatus 10 so as to be height in which the attachment of various types of apparatuses to the electrical facility board 100 becomes easy.

Work of standing the electrical facility board 100 in which various types of apparatuses are assembled is started. During the assembly work of the electrical facility board 100, a standing platform 54 of a standing apparatus 50 is retained at a position in a vertical direction as shown in FIG. 9 and the standing platform 54 of the standing apparatus 50 is pivoted by a standing driving mechanism 55 to set the standing platform 54 to a horizontal position as shown in FIG. 11.

As shown in FIG. 11, the raising/lowering platforms 12 are raised/lowered by the driving mechanism 14 of the raising/lowering apparatus 10 to match the height positions of the transferring rollers 31 of the transferring roller mechanisms 30 on the raising/lowering platforms 12 to the height positions of the standing rollers 61 of the standing roller mechanisms 60 on the standing platform 54 of the standing apparatus 50.

The electrical facility board 100 mounted on the skateboards 70 fitted onto the transferring rollers 31 of the transferring roller mechanisms 30 on the raising/lowering platforms 12 is pressed to the standing apparatus 50 side, thereby rotating the transferring rollers 31, whereby the skateboards 70 on which the electrical facility board 100 is mounted are smoothly transferred to the standing roller 61 side of the standing roller mechanisms 60 on the standing platform 54 and the standing rollers 61 are rotated. Therefore, the skateboards 70 on which the electrical facility board 100 is mounted are smoothly transferred and the electrical facility board 100 is brought into contact with the mounting body 56 to be mounted on the standing rollers 61 of the standing roller mechanism 60 on the standing platform 54.

The standing platform 54 of the standing apparatus 50 is pivoted by the standing driving mechanism 55 to return the standing platform 54 to a vertical position as shown in FIG. 14, whereby the overturned an electrical facility board 100 can be stood in the vertical direction.

As described above, the electrical facility board 100 mounted on the skateboards 70 fitted onto the transferring rollers 31 of the transferring roller mechanisms 30 on the raising/lowering platforms 12 is pressed to the standing apparatus 50 side, whereby the electrical facility board 100 can be smoothly transferred to the standing roller 61 sides of the standing roller mechanisms 60 on the standing platform 54; and the skateboards 70 on which the electrical facility board 100 is mounted are smoothly transferred and bring the electrical facility board 100 into contact with the mounting body 56 to be able to be mounted on the standing rollers 61 of the standing roller mechanisms 60 on the standing platform 54. Then, the standing platform 54 of the standing apparatus 50 is pivoted by the standing driving mechanism 55 to return the standing platform 54 to the vertical position, whereby the overturned electrical facility board 100 can be easily stood in the vertical direction by one person's work. Therefore, also in this Embodiment 2, the same effects as the aforementioned Embodiment 1 can be exhibited.

Furthermore, there is shown the case where the skateboards 70 are arranged in two sets in the axial line directions of the transferring rollers 31 of the transferring roller mechanisms 30; however, the present invention is not limited to this. Then, the skateboards 70 can be arranged in two or more sets, or it can also be arranged as one skateboard 70 that is extended in the axial line directions of the transferring rollers 31 of the transferring roller mechanisms 30, and the same effects as the aforementioned Embodiment 2 can be exhibited.

Incidentally, the electrical facility board 100 stood on the mounting body 56 of the standing apparatus 50 is to be delivered to a subsequent process by a conveyor or the like.

By the way, the aforementioned Embodiment 2 shows the case where the transferring rollers 31 of the transferring roller mechanisms 30 are arranged in at least two rows with a space therebetween; however, the present invention is not limited to this. Then, it can also be arranged as one transferring roller 31 that is extended in the axial line direction of the transferring roller 31 of the transferring roller mechanism 30 and the same effects can be exhibited.

Furthermore, the aforementioned Embodiment 2 shows the case where the standing rollers 61 of the standing roller mechanisms 60 are arranged in at least two rows with a space therebetween; however, the present invention is not limited to this. Then, it can also be arranged as one standing roller 61 that is extended in the axial line direction of the standing roller 61 of the standing roller mechanism 60 and the same effects can be exhibited.

As described above, in the case of one transferring roller 31 and one standing roller 31, it can also be arranged as one skateboard 70 and the same effects can be exhibited.

Incidentally, in the aforementioned respective embodiments, there has been described the case where the raising/lowering platforms 12 are divided into two; however, the present invention is not limited to this. Then, the raising/lowering platform 12 may be constituted by one sheet of plate and the same effects as the aforementioned respective embodiments can be exhibited.

Incidentally, the present invention can freely combine the respective embodiments and appropriately modify and/or omit the respective embodiments, within the scope of the present invention.

### INDUSTRIAL APPLICABILITY

The present invention is suitable for actualizing a standing facility of an electrical facility board and a standing method of an electrical facility board, which can easily stand an overturned electrical facility board.

### DESCRIPTION OF REFERENCE NUMERALS

10 Raising/lowering apparatus, 11 Base, 12 Raising/lowering platform, 13 Linking mechanism, 14 Driving mechanism, 30 Transferring roller mechanism, 31 Transferring roller, 50 Standing apparatus, 51 Fixing body, 54 Standing platform, 55 Standing driving mechanism, 56 Mounting body, 60 Standing roller mechanism, 61 Standing roller, 70 Skateboard, and 100 Electrical facility board.

## Claims

1. A standing facility for raising/lowering, transferring and overturning an electrical facility board, comprising:
a raising/lowering apparatus (10), fixed on a floor base (1), comprising a base (11), a raising/lowering platform (12) which is arranged above said base (11) and on which an electrical facility board (100) is to be mounted, a linking mechanism (13) which is engaged to said base (11) and said raising/lowering platform (12), and a driving mechanism (14) which is configured to raise/lower said raising/lowering platform (12);
a transferring roller mechanism (30) comprising a plurality of arranged transferring rollers (31) arranged on said raising/lowering platform (12);
a standing apparatus (50), fixed on the floor base (1) near the raising/lowering apparatus (10), comprising a fixing body (51), a standing platform (54) pivotally fitted to said fixing body (51), a mounting body (56) provided on said standing platform (54), and a standing driving mechanism (55) which is configured to pivot said standing platform (54), wherein the standing platform (54) of the standing apparatus (50) is arranged on the floor base (1) with a space in which the standing platform (54) does not come into contact with the raising/lowering apparatus (10) when the standing platform (54) is pivoted so as to be in a horizontal direction; and
a standing roller mechanism (60) comprising a plurality of arranged standing rollers (61) arranged on said standing platform (54), wherein, by this arrangement, the electrical facility board mounted on the transferring rollers (31) of the transferring roller mechanisms (30) on the raising/lowering platforms (12) can be pressed to the standing apparatus (50) side, thereby rotating the transferring rollers (31), whereby the electrical facility board can be smoothly transferred to the standing roller (61) sides of the standing roller mechanisms (60) on the standing platform (54) and the standing rollers 61 are thereby rotated.

2. The standing facility according to claim 1,
wherein said transferring rollers (31) are arranged in at least two rows with a space therebetween.

3. The standing facility according to claim 1 or claim 2,
wherein said standing rollers (61) are arranged in at least two rows with a space therebetween.

4. The standing facility according to any one of claim 1 to claim 3,
wherein said transferring roller (31) of said transferring roller mechanism (30) and said standing roller (61) of said standing roller mechanism (60) are arranged at axial line positions in the same transferring direction.

5. The standing facility according to claim 1,
wherein said standing roller mechanism (60) is arranged at an axial line position that is the same as the transferring direction of said transferring roller (31) of said transferring roller mechanism (30); and
further comprising one or more skateboards (70) being movably fitted onto said transferring rollers (31) of said transferring roller mechanism (30) and being also capable of being fitted onto said standing rollers (61) of said standing roller mechanism (60).

6. The standing facility according to claim 5,
wherein said transferring rollers (31) are arranged in at least two rows with a space therebetween.

7. The standing facility according to claim 5 or claim 6,
wherein said standing rollers (61) are arranged in at least two rows with a space therebetween.

8. The standing facility according to any one of claim 5 to claim 7,
wherein said skateboards (70) are arranged in two sets in the axial line direction of said transferring roller (31) of said transferring roller mechanism (30).

9. A standing method for lifting/lowering. transferring and overturning an electrical facility board, using the standing facility of claim 1, comprising the steps of:
a) mounting said assembled electrical facility board on the transferring roller mechanism (30) arranged on the raising/lowering platform (12) of the raising/lowering apparatus (10); b) pivoting the standing platform (54) of the standing apparatus (50) by the standing driving mechanism to set said standing platform (54) to a horizontal position; c) raising/lowering said raising/lowering platform (12) by the driving mechanism of said raising/lowering apparatus (10) to match the height position of said transferring roller mechanism (30) on said raising/lowering platform (12) to the height position of the standing roller mechanism (60) on said standing platform (54); and d) bringing said electrical facility board into contact with a mounting body of said standing platform (54) to be mounted on said standing roller mechanism (60) on said standing platform (54) and pivoting said standing platform (54) of said standing apparatus (50) by said standing driving mechanism to set said standing platform (54) to a vertical position.

## Patentansprüche

1. Standanlage zum Anheben/Absenken, Umsetzen und Umkippen einer elektrischen Anlagentafel, umfassend:
eine Hebe-/Senkvorrichtung (10), die auf einem Bodensockel (1) befestigt ist, mit einem Sockel (11), einer Hebe-/Senkplattform (12), die über dem Sockel (11) angeordnet ist und auf der eine elektrische Anlagentafel (100) zu montieren ist, einem Verbindungsmechanismus (13), der mit dem Sockel (11) und der Hebe-/Senkplattform (12) in Eingriff steht, und einem Antriebsmechanismus (14), der zum Heben/Senken der Hebe-/Senkplattform (12) konfiguriert ist;
einen Transferrollenmechanismus (30), der eine Vielzahl von angeordneten Transferrollen (31) umfasst, die auf der Hebe-/Senkplattform (12) angeordnet sind;
eine Standvorrichtung (50), die auf der Bodenbasis (1) in der Nähe der Hebe-/Senkvorrichtung (10) befestigt ist, mit einem Befestigungskörper (51), einer Standplattform (54), die schwenkbar an dem Befestigungskörper (51) angebracht ist, einem Montagekörper (56), der auf der Standplattform (54) vorgesehen ist, und einem Standantriebsmechanismus (55), der zum Schwenken der Standplattform (54) konfiguriert ist wobei die Standplattform (54) der Standvorrichtung (50) auf der Bodenbasis (1) mit einem Zwischenraum angeordnet ist, in dem die Standplattform (54) nicht in Kontakt mit der Hebe-/Senkvorrichtung (10) kommt, wenn die Standplattform (54) so geschwenkt wird, dass sie in einer horizontalen Richtung ist; und
einen Standrollenmechanismus (60), der eine Vielzahl von angeordneten Standrollen (61) umfasst, die auf der Standplattform (54) angeordnet sind, wobei durch diese Anordnung die elektrische Einrichtungstafel, die auf den Übertragungsrollen (31) der Übertragungsrollenmechanismen (30) auf den Hebe-/Senkplattformen (12) angebracht ist, zur Seite der Standvorrichtung (50) gedrückt werden kann, wodurch die Übertragungsrollen (31) gedreht werden, wodurch die elektrische Einrichtungstafel reibungslos zu den Seiten der Standrollen (61) der Standrollenmechanismen (60) auf der Standplattform (54) übertragen werden kann und die Standrollen (61) dadurch gedreht werden.

2. Standanlage nach Anspruch 1,
wobei die Übertragungsrollen (31) in mindestens zwei Reihen mit einem Zwischenraum dazwischen angeordnet sind.

3. Standanlage nach Anspruch 1 oder Anspruch 2,
wobei die Standrollen (61) in mindestens zwei Reihen mit einem Zwischenraum dazwischen angeordnet sind.

4. Standanlage nach einem der Ansprüche 1 bis 3,
wobei die Übertragungsrolle (31) des Übertragungsrollenmechanismus (30) und die Standrolle (61) des Standrollenmechanismus (60) an axialen Linienpositionen in derselben Übertragungsrichtung angeordnet sind.

5. Standanlage nach Anspruch 1,
wobei der Standrollenmechanismus (60) an einer axialen Linienposition angeordnet ist, die die gleiche ist wie die Übertragungsrichtung der Übertragungsrolle (31) des Übertragungsrollenmechanismus (30); und
ferner mit einem oder mehreren Rollbrettern (70), die beweglich auf den Übertragungsrollen (31) des Übertragungsrollenmechanismus (30) angebracht sind und auch auf den Standrollen (61) des Standrollenmechanismus (60) angebracht werden können.

6. Standanlage nach Anspruch 5,
wobei die Übertragungsrollen (31) in mindestens zwei Reihen mit einem Zwischenraum dazwischen angeordnet sind.

7. Standanlage nach Anspruch 5 oder Anspruch 6,
wobei die Standrollen (61) in mindestens zwei Reihen mit einem Zwischenraum dazwischen angeordnet sind.

8. Standanlage nach einem der Ansprüche 5 bis 7,
wobei die Rollbretter (70) in zwei Sätzen in der axialen Linienrichtung der Übertragungsrolle (31) des Übertragungsrollenmechanismus (30) angeordnet sind.

9. Standverfahren zum Anheben/Absenken, Umsetzen und Umkippen einer elektrischen Anlagentafel unter Verwendung der Standanlage nach Anspruch 1, umfassend die Schritte:
a) Anbringen der zusammengebauten elektrischen Anlagentafel auf dem Übertragungsrollenmechanismus (30), der auf der Hebe-/Senkplattform (12) der Hebe-/Senkvorrichtung (10) angeordnet ist; b) Schwenken der Standplattform (54) der Standvorrichtung (50) durch den Standantriebsmechanismus, um die Standplattform (54) in eine horizontale Position zu bringen; c) Anheben/Absenken der Hebe-/Senkplattform (12) durch den Antriebsmechanismus der Hebe-/Senkvorrichtung (10), um die Höhenposition des Übertragungsrollenmechanismus (30) auf der Hebe-/Senkplattform (12) an die Höhenposition des Standrollenmechanismus (60) auf der Standplattform (54) anzupassen; und d) In-Kontakt-Bringen der elektrischen Anlagentafel mit einem Montagekörper der Standplattform (54), die an dem Standrollenmechanismus (60) auf der Standplattform (54) montiert werden soll, und Schwenken der Standplattform (54) der Standvorrichtung (50) durch den Standantriebsmechanismus, um die Standplattform (54) in eine vertikale Position zu bringen.

## Revendications

1. Installation d'appui permettant de lever/abaisser, transférer et retourner un tableau d'installation électrique, comprenant :
un appareil de levage/abaissement (10), fixé sur une base au sol (1), comprenant une base (11), une plate-forme de levage/abaissement (12) qui est disposée au-dessus de ladite base (11) et sur laquelle doit être monté un tableau d'installation électrique (100), un mécanisme de liaison (13) en prise avec ladite base (11) et ladite plate-forme de levage/abaissement (12), et un mécanisme d'entraînement (14) qui est conçu pour lever/abaisser ladite plate-forme de levage/abaissement (12) ;
un mécanisme à rouleaux de transfert (30) comprenant une pluralité de rouleaux de transfert (31) disposés sur ladite plate-forme de levage/abaissement (12) ;
un appareil d'appui (50), fixé sur la base au sol (1) à proximité de l'appareil de levage/abaissement (10), comprenant un corps de fixation (51), une plate-forme d'appui (54) montée de manière pivotante sur ledit corps de fixation (51), un corps de montage (56) placé sur ladite plate-forme d'appui (54), et un mécanisme d'entraînement d'appui (55) qui est conçu pour faire pivoter ladite plate-forme d'appui (54), dans laquelle la plate-forme d'appui (54) de l'appareil d'appui (50) est disposée sur la base au sol (1) avec un espace dans lequel la plate-forme d'appui (54) n'entre pas en contact avec l'appareil de levage/abaissement (10) lorsque la plate-forme d'appui (54) est amenée à pivoter de manière à être dans une direction horizontale ; et
un mécanisme à rouleaux d'appui (60) comprenant une pluralité de rouleaux d'appui (61) disposés sur ladite plate-forme d'appui (54), dans laquelle, grâce à cette disposition, le tableau d'installation électrique monté sur les rouleaux de transfert (31) des mécanismes à rouleaux de transfert (30) sur les plates-formes de levage/abaissement (12) peut être pressé du côté de l'appareil d'appui (50), permettant ainsi de faire tourner les rouleaux de transfert (31), moyennant quoi le tableau d'installation électrique peut être transféré sans à-coups du côté des rouleaux d'appui (61) des mécanismes à rouleaux d'appui (60) sur la plate-forme d'appui (54) et les rouleaux d'appui 61 sont ainsi amenés à tourner.

2. Installation d'appui selon la revendication 1,
dans laquelle lesdits rouleaux de transfert (31) sont disposés en au moins deux rangées avec un espace entre elles.

3. Installation d'appui selon la revendication 1 ou la revendication 2,
dans laquelle lesdits rouleaux d'appui (61) sont disposés en au moins deux rangées avec un espace entre elles.

4. Installation d'appui selon l'une quelconque de la revendication 1 à la revendication 3,
dans laquelle ledit rouleau de transfert (31) dudit mécanisme à rouleaux de transfert (30) et ledit rouleau d'appui (61) dudit mécanisme à rouleaux d'appui (60) sont disposés à des positions de ligne axiale dans la même direction de transfert.

5. Installation d'appui selon la revendication 1,
dans laquelle ledit mécanisme à rouleaux d'appui (60) est disposé à une position de ligne axiale qui est la même que la direction de transfert dudit rouleau de transfert (31) dudit mécanisme à rouleaux de transfert (30) ; et
comprenant en outre une ou plusieurs planches à roulettes (70) montées de manière mobile sur lesdits rouleaux de transfert (31) dudit mécanisme à rouleaux de transfert (30) et pouvant également être montées sur lesdits rouleaux d'appui (61) dudit mécanisme à rouleaux d'appui (60).

6. Installation d'appui selon la revendication 5,
dans laquelle lesdits rouleaux de transfert (31) sont disposés en au moins deux rangées avec un espace entre elles.

7. Installation d'appui selon la revendication 5 ou la revendication 6,
dans laquelle lesdits rouleaux d'appui (61) sont disposés en au moins deux rangées avec un espace entre elles.

8. Installation d'appui selon l'une quelconque de la revendication 5 à la revendication 7,
dans laquelle lesdites planches à roulettes (70) sont disposées en deux ensembles dans la direction de ligne axiale dudit rouleau de transfert (31) dudit mécanisme à rouleaux de transfert (30).

9. Procédé d'appui permettant de lever/abaisser, transférer et retourner un tableau d'installation électrique, à l'aide de l'installation d'appui selon la revendication 1, comprenant les étapes consistant à :
a) monter ledit tableau d'installation électrique assemblé sur le mécanisme à rouleaux de transfert (30) disposé sur la plate-forme de levage/abaissement (12) de l'appareil de levage/abaissement (10) ; b) faire pivoter la plate-forme d'appui (54) de l'appareil d'appui (50) par le mécanisme d'entraînement d'appui afin de mettre ladite plate-forme (54) en position horizontale ; c) lever/abaisser ladite plate-forme de levage/abaissement (12) par le mécanisme d'entraînement dudit appareil de levage/abaissement (10) afin de faire correspondre la position en hauteur dudit mécanisme à rouleaux de transfert (30) sur ladite plate-forme de levage/abaissement (12) et la position en hauteur du mécanisme à rouleaux d'appui (60) sur ladite plate-forme d'appui (54) ; et d) mettre en contact ledit tableau d'installation électrique avec un corps de montage de ladite plate-forme d'appui (54) à monter sur ledit mécanisme à rouleaux d'appui (60) de ladite plate-forme d'appui (54) et faire pivoter ladite plate-forme d'appui (54) dudit appareil d'appui (50) par ledit mécanisme d'entraînement d'appui afin de mettre ladite plate-forme d'appui (54) en position verticale.
